# DEMANDE DE BREVET EUROPEEN

(11) **EP 0 762 181 A1**
(43) Date de publication de la demande: **12.03.1997**
(21) Numéro de dépôt: 96401747.9
(22) Date de dépôt: 07.08.1996
(51) Int. Cl.: G02F 1/1335

(54) **Perfectionnement au dispositif d'affichage comportant un système d'éclairage arrière fournissant une lumière collimatée**

(30) Priorité: 11.08.1995 FR 9509753
(71) Demandeur: THOMSON multimedia, 92400 Courbevoie (FR)
(72) Inventeur: Haas, Gunther, 92050 Paris La Defense Cedex (FR); Battarel, Denis, 92050 Paris La Defense Cedex (FR); Dupont, Antoine, 92050 Paris La Defense Cedex (FR); Marcellin-Dibon, Eric, 92050 Paris La Defense Cedex (FR); Mourey, Bruno, 92050 Paris La Defense Cedex (FR); Sarayeddine, Khaled, 92050 Paris La Defense Cedex (FR); Drazic, Valter, 92050 Paris La Defense Cedex (FR)
(74) Mandataire: Ruellan-Lemonnier, Brigitte

(57) **Abrégé**

La présente invention concerne un dispositif d'affichage comportant un système d'éclairage (10) arrière fournissant une lumière collimatée, un modulateur electro-optique transmissif du type afficheur à cristaux liquides (LCD) et un moyen (110) pour distribuer la lumière angulairement, caractérisé en ce que la distance entre le moyen pour distribuer la lumière angulairement et l'afficheur est choisie pour obtenir un effet de filtrage spatial.

DE plus, une couche de filtres colorés (117) est positionné entre l'afficheur et le moyen pour distribuer la lumière angulairement.

Applications : vidéophone, télévision portable, micro-calculateurs, etc ...

## Description

La présente invention concerne des perfectionnements à un dispositif d'affichage, plus particulièrement du type afficheur à cristaux liquides, utilisé dans le mode transmission et éclairé par l'arrière par un système d'éclairage fournissant une lumière collimatée.

Les afficheurs à cristaux liquides ont comme inconvénients que leurs caractéristiques electro-optiques dépendent fortement des conditions angulaires d'observation. Ainsi, pour des angles de vue très importants, on remarque une dégradation du contraste et une inversion de l'échelle des gris. Pour remédier à ces inconvénients, on a proposé d'utiliser une source de lumière collimatée, un moyen pour distribuer la lumière angulairement (notamment un réseau de micro-lentilles ou un diffuseur holographique), étant associé au modulateur du côté observation. Dans ce cas, la lumière vue par un observateur regardant l'afficheur sous un certain angle est modulée par l'afficheur à cristaux liquides à l'intérieur d'un angle solide indépendant de l'angle d'observation. D'autre part, l'utilisation d'une lumière collimatée permet la réalisation de divers perfectionnements au niveau du dispositif d'affichage lui-même et des éléments qui lui sont associés pour réaliser le système complet de vision directe.

La présente invention a donc pour objet un dispositif d'affichage comportant un système d'éclairage arrière fournissant une lumière collimatée, un modulateur électro-optique transmissif du type afficheur à cristaux liquides et un moyen pour distribuer la lumière angulairement, caractérisé en ce que la distance entre le moyen pour distribuer la lumière angulairement et l'afficheur est choisie pour obtenir un effet de filtrage spatial.

La présente invention a aussi pour objet un dispositif d'affichage comportant un système d'éclairage arrière fournissant une lumière collimatée, un modulateur électro-optique transmissif du type afficheur à cristaux liquides et un moyen pour distribuer la lumière angulairement, caractérisé en ce qu' une couche de filtres colorés est positionnée entre l'afficheur et le moyen pour distribuer la lumière angulairement. Cette couche de filtres colorés peut comporter une couche matricielle noire appelée "black matrix".

Selon une autre caractéristique de la présente invention, un des substrats transparents formant l'afficheur à cristaux liquides incorpore une rangée à une ou deux dimensions de micro-lentilles, chaque micro-lentille formant l'image de l'élément pixel associé de l'afficheur sur l'écran de diffusion.

Selon une autre caractéristique, un des substrats transparents formant l'afficheur à cristaux liquides incorpore une rangée à une ou deux dimensions de micro-lentilles, chaque micro-lentille collectant la lumière entrant dans l'élément pixel associé de l'afficheur.

D'autres caractéristiques et avantages de la présente invention apparaîtront à la lecture de la description faite ci-après de différents modes de réalisation de la présente invention, cette description étant faite avec référence aux dessins annexés dans lesquels:
- la figure 1 est une vue en coupe schématique d'un dispositif d'affichage utilisant un système d'éclairage arrière donnant une lumière collimatée ;
- la figure 2 représente une courbe donnant l'intensité de la distribution lumineuse sur l'écran pour un angle de collimation donné ;
- la figure 3 est une courbe donnant la distance s fonction de la diffusion d'un pixel en fonction de l'ange de collimation α et ;
- la figure 4 représente le pourcentage d'énergie pénétrant dans les pixels adjacents en fonction de l'angle de collimation α pour différentes épaisseurs d'écrans à cristaux liquides ;
- la figure 5 est une vue en perspective schématique d'un système d'éclairage arrière donnant une lumière collimatée susceptible d'être utilisée dans la présente invention ;
- la figure 6 représente la disposition du filtre coloré dans un afficheur à cristaux liquides utilisé dans la présente invention ;
- les figures 7a, 7b et 7c représentent différents dessins pour la "black matrix" conformément à la présente invention ;
- la figure 8 représente schématiquement un perfectionnement améliorant le contraste.

Pour simplifier la description dans les figures les mêmes éléments portent les mêmes références.

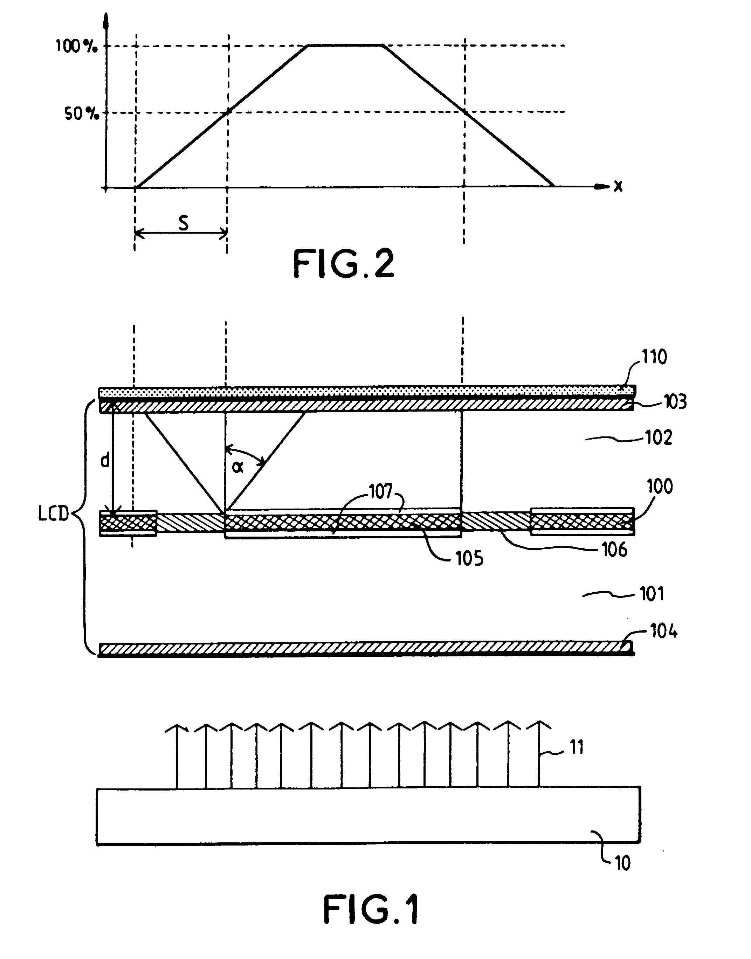

On décrira maintenant, avec référence aux figures 1 à 8, différents perfectionnements à un dispositif d'affichage comportant un système d'éclairage arrière permettant d'obtenir une lumière collimatée. Ainsi comme représenté sur la figure 1, le système d'éclairage arrière référencé 10 permet d'obtenir une lumière fortement collimatée dont les rayons sont référencés 11. Un système susceptible d'être utilisé dans les dispositifs d'affichage sera décrit ci-après. Comme représenté sur la figure 1, ce dispositif est constitué essentiellement d'un afficheur à cristaux liquides, référencé LCD sur la figure 1 qui, de manière connue, est constitué d'une couche de cristal liquide de quelques micromètres d'épaisseur 100 enfermée entre deux substrats transparents 101 et 102 avec des polariseurs 103 et 104 fixés sur les parois. Chaque élément formant une image connu sous le terme pixel est constitué d'une surface active 105 entourée par une surface inactive qui est de manière typique recouverte par une matrice noire 106 connue sous le terme "black-matrix". Cette Black Matrix permet d'éviter toutes fuites lumineuses dans l'état noir du pixel. En général le cristal liquide est adressé par des électrodes de pixel transparentes 107 dans la surface active. Dans un mode de réalisation préférentiel, un moyen pour distribuer la lumière angulairement 110 est fixé au polariseur 103 et l'ensemble est éclairé par le système d'éclairage 10 donnant une lumière collimatée. Dans ce cas et comme représenté sur la figure 2, si la source d'éclairage 10 présente une distribution lumineuse uniforme à l'intérieur d'un cône caractérisé par un angle de demi-ouverture α où α est mesuré à l'intérieur du substrat transparent 101, 102, dans ce cas l'image de la surface active 105 formée sur l'écran de diffusion 110 présente une distribution d'intensité telle que représentée sur la figure 2. Dans ce cas, la dispersion d'un pixel peut être caractérisée par la distance S définie sur la figure 2 et qui donne sur le diffuseur 110 la distance à partir du pixel original où l'intensité arrive à 0.

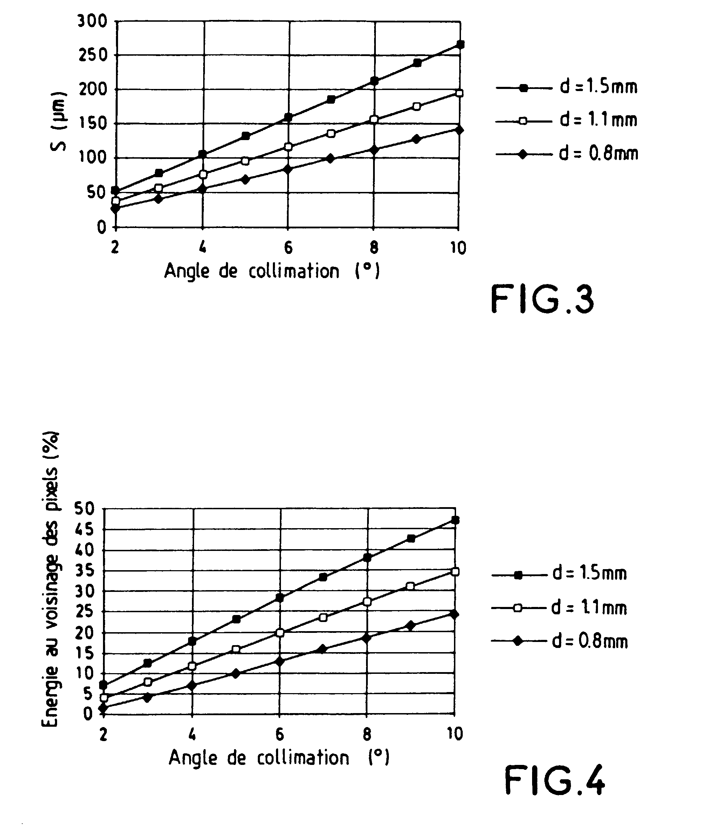

Pour mieux illustrer l'un des avantages de la présente invention, on a représenté sur les figures 3 et 4 ladite distance S telle que définie ci-dessus en fonction de l'angle de collimation α pour différentes épaisseurs D correspondant à l'épaisseur du substrat transparent 102 plus l'épaisseur du polariseur 103, .ainsi que l'énergie au voisinage d'un pixel en fonction de l'angle de collimation α pour ces différentes épaisseurs 2. La valeur D = 1,5 mm correspond à l'épaisseur de verre la plus largement utilisée avec un polariseur normal d'épaisseur 0,4 mm. Cependant on peut réaliser des écrans à cristaux liquides avec des épaisseurs de verre de 0,7 mm, dans ce cas D = 1,1 mm correspond à une épaisseur de verre de 0,7 mm et un polariseur d'épaisseur 0,4 mm tandis que D = 0,8 mm correspond à un verre de 0,7 mm avec un polariseur particulier. On s'aperçoit dans ce cas que même si D = 1,5 mm un angle de collimation de 4° est tout à fait acceptable. Un tel angle de collimation peut être facilement obtenu avec une lampe halogène , une lampe au tungstène ou un tube fluorescent dans un dispositif d'éclairage arrière tel que décrit ci-dessus. Ainsi, selon une caractéristique de la présente invention et pour certaines applications, cet effet de diffusion peut être utilisé afin d'obtenir un filtrage spatial de l'afficheur. Afin de supprimer la structure en pixel de l'afficheur, la distance D aussi bien que l'angle de collimation α peuvent être ajustés de manière adéquate sans affecter la résolution de l'afficheur.

Le système d'éclairage arrière utilisé pour obtenir une lumière collimatée peut être tout système connu dans la littérature. Ce peut être aussi un système tel que celui décrit dans la demande de brevet français déposé le même jour ayant pour titre "Système d'éclairage arrière pour modulateur électro-optique tranmissif et dispositif d'affichage comportant un tel système d'éclairage".

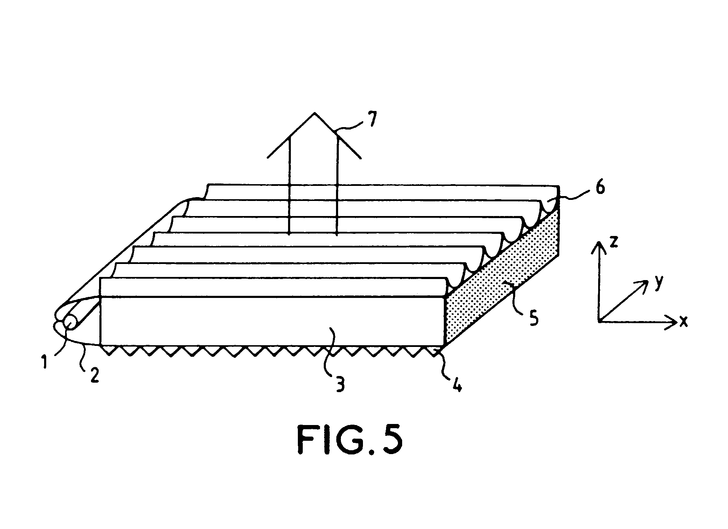

Comme représenté sur la figure 5, ce système d'éclairage permettant d'obtenir une lumière collimatée comporte une source lumineuse 1 qui peut être ,par exemple, réalisée à l'aide d'un tube fluorescent. Cette source lumineuse est entourée sur toute la longueur du tube 1 par un moyen de réflexion 2 permettant de renvoyer les rayons lumineux émis par le tube selon une première direction appelée x. Le réflecteur 2 a de préférence la forme d'un concentrateur optique connu par exemple sous le terme CPC (du terme anglais: compound parabolic concentrator). Ce réflecteur 2 se prolonge par un moyen de transmission de la lumière 3 positionné en sortie du réflecteur de manière à transporter les rayons lumineux selon la direction x. Ce moyen de transmission de la lumière 3 est, de préférence, un guide d'ondes réalisé en un matériau transparent qui peut être par exemple du verre ou un matériau organique polymérique tel qu'un matériau acrylique. La hauteur du guide d'onde 3 est, de préférence, plus importante ou égale à la circonférence de la source lumineuse 1 de manière à obtenir une éfficacité maximale dans la transmission de la lumière. De manière connue, le guide d'onde 3 comporte sur sa partie inférieure une structure micro-prismatique 4 qui réfléchit spéculairement les rayons lumineux de manière à les envoyer dans la direction z. Cette structure micro-prismatique 4 est soit une partie du guide d'ondes 3 soit réalisée dans un matériau identique ou similaire et appairé en indice au guide d'ondes. Les rayons lumineux sont réfléchis par ladite structure micro-prismatique soit par réflection interne totale, soit par réflection sur une couche métallique, de préférence en aluminium, déposée sur la surface extérieure de ladite structure micro-prismatique. Pour éviter que la lumière ne sorte du guide d'onde dans la direction x à l'extrémité opposée à celle recevant la lumière, cette extrémité du guide d'ondes est revêtue avec un matériau réfléchissant 5, de préférence de l'aluminium. De ce fait les rayons lumineux se transportant à l'intérieur du guide d'ondes sont réfléchis spéculairement par la structure micro-prismatique 4 et renvoyés dans la direction z. Il est également possible, selon une autre réalisation de la présente invention, de placer une deuxième source lumineuse avec son réflecteur sur ladite extrémité du guide d'ondes au lieu de la couche 5 afin d'augmenter le flux lumineux du système.

Conformément à la présente invention, sur la partie du guide d'ondes 3 opposée à celle comportant la structure micro-prismatique est prévue un moyen de collimation 6 permettant de réaliser la collimation des rayons lumineux en sortie au moins dans un plan y-z, comme représenté sur la figure 5, de ce fait la lumière référencée 7 extraite du guide d'ondes par réflexion spéculaire est collimatée dans le plan z-y par l'intermédiaire de ce moyen de collimation spécial 6, cette lumière étant déjà collimatée dans le plan x-z.

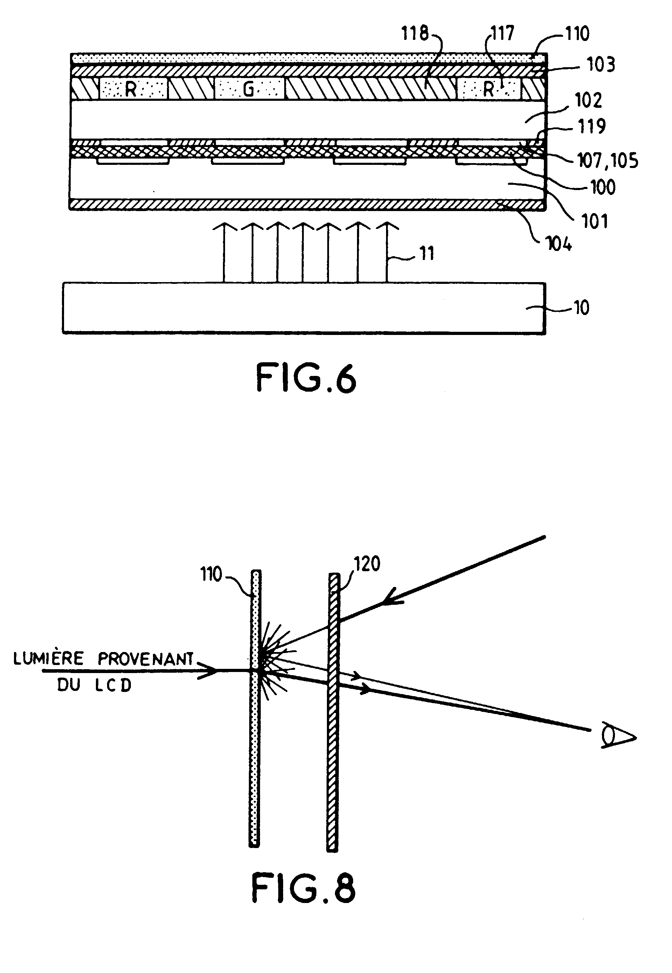

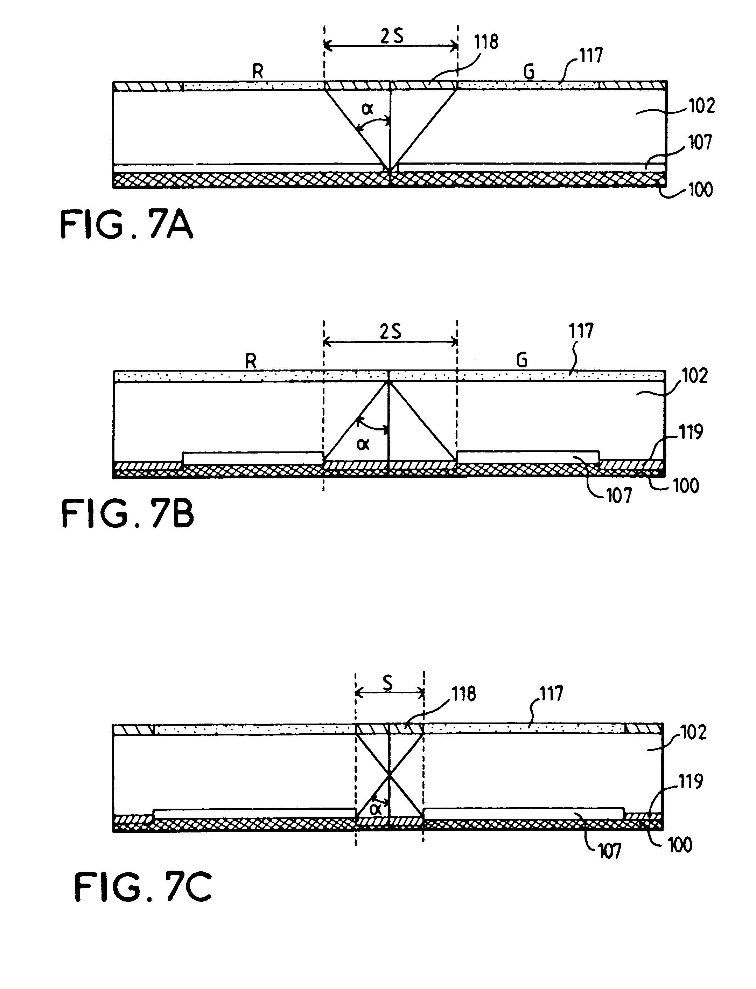

On décrira maintenant avec référence à la figure 6, un autre mode de réalisation d'un dispositif d'affichage utilisant un système d'éclairage donnant une lumière collimatée permettant d'utiliser une structure particulière pour les filtres colorés. Ainsi, comme représenté sur la figure 6 dans laquelle les éléments identiques à ceux de la figure 1 sont représentés avec les mêmes références, les filtres colorés qui dans un écran à cristaux liquides conventionnel sont placés à l'intérieur d'un des substrats transparents, ont été positionnés à l'extérieur comme représenté par la référence 117 sur la figure 6. L'utilisation de filtres colorés 117 à l'extérieur du substrat 102 permet d'utiliser des filtres colorés bon marché, par exemple de simples films photographiques qui ont été exposés à la structure pixel voulue. Dans le mode de réalisation préférentiel représenté à la figure 6, une couche de filtres colorés 117 incorporant une matrice noire 118 est placée à l'extérieur du substrat transparent 102 suivi par le polariseur 103 et l'écran de diffusion 110. En fonction de l'application et du matériau utilisé pour réaliser les filtres colorés le filtre coloré peut aussi être placé devant le polariseur 103. En général une matrice noire supplémentaire 119 sera utilisée sur le substrat transparent pour empêcher toute fuite lumineuse dans l'état noir. Pour éviter les phénomènes connus sous le terme "cross color" il doit y avoir au moins une matrice noire, sa largeur est déterminée par le fait que la lumière à partir d'un pixel coloré ne doit pas pénétrer à l'intérieur du pixel adjacent sur l'écran de diffusion. Trois dispositions sont possibles comme représentés sur les figures 7a à 7c dans lesquelles P représente le pas d'un pixel coloré individuel. Ainsi comme représenté sur la figure 7a, la matrice noire est réalisée seulement sur la couche de filtres colorés 117. La matrice noire présente une largeur de 2S et la transmission dans ce cas est donnée par la formule T = (P-2S)/p. Sur la figure 7b on a représenté une black matrix 119 réalisée à l'intérieur du substrat transparent. Sur la figure 7c, une black matrix 117 est réalisée sur la couche de filtres colorés 118 et une black matrix 119 est réalisée à l'extérieur du substrat transparent. Dans ce cas, la largeur de la black matrix est de S et la transmission T = (P-3/2S)/p. La solution représentée à la figure 7c est dans la plupart des cas la solution préférée parce qu'elle donne la transmission la plus élevée. Ainsi, le tableau ci-après représentant la distance S et la transmission des matrices noires 118 et 119 en supposant un pas de pixel de 100 µm x 300 µm et pour deux épaisseurs différentes des substrats transparents a été représenté.

| α[°] | s[µm] | | transmission [%] | |
|---|---|---|---|---|
| | d = 1,1 mm | d = 0,7 mm | d = 1,1 mm | d = 0,7 mm |
| 1 | 19 | 12 | 71 | 82 |
| 2 | 38 | 24 | 42 | 63 |
| 3 | 58 | 37 | 14 | 45 |
| 4 | 77 | 49 | 0 | 27 |

La couche de filtres colorés comportant une matrice noire comme représenté sur la figure 6 par exemple, peut être obtenue de nombreuses manières. Ainsi on peut utiliser un procédé photographique dans lequel on éclaire un film photographique avec la structure de filtres colorés souhaitée et un développement ultérieur. D'autre part on peut utiliser un procédé d'impression. La couche de filtres colorés peut être aussi obtenue en utilisant un filtre d'interférence dichroïque ou un procédé holographique ou une interférence biréfringente en utilisant un polymère à cristal liquide.

D'autres perfectionnements peuvent être aussi utilisés avec le dispositif d'affichage conforme à la présente invention. Ainsi l'écran de diffusion peut être un écran de diffusion présentant des caractéristiques non lambertienne dirigeant la lumière selon une gamme angulaire prédéterminée ce qui augmente la luminance dans cette gamme par comparaison à un diffuseur lambertien.

Il est aussi possible, de manière à optimiser le contraste du système, que la distribution angulaire de la lumière collimatée fournie par le système d'éclairage arrière soit choisie afin d'être en accord avec la caractéristique de contraste de l'écran à cristaux liquides. D'autre part la sortie lumineuse du système peut être améliorée si une rangée de micro-lentilles est incorporée dans le substrat transparent 102, chacune formant l'image du pixel associée sur l'écran 110. Dans ce cas, la matrice noire 118 est redondante. De la même manière, des rangées de micro-lentilles peuvent être incorporées dans ou sur le substrat transparent 101 afin de collecter toute la lumière incidente sur la surface active 105 du pixel associé. Lesdites rangées de micro-lentilles peuvent être des rangées à une dimension de lentilles cylindriques, le nombre de lentilles correspondant au nombre de pixels dans les directions horizontale et verticale. On peut aussi utiliser des rangées à deux dimensions de même dimension que la matrice formée par les pixels de l'écran à cristaux liquides.

Un perfectionnement important concerne le contraste du dispositif de visualisation selon l'invention sous lumière ambiante: Selon le choix du moyen de distribution 110 qui peut être réalisé de façon efficace par un dépoli ou un diffuseur holographique, le contraste sous lumière ambiante est souvent limité par la rétro-diffusion de l'élément 110. Profitant du fait, que la lumière sortant du LCD est polarisée et que cette polarisation est en général maintenue par l'élément 110 (par exemple dans le cas d'un dépoli ou un diffuseur holographique), tandis que la polarisation de la lumière ambiante rétro-diffusée par le même élément 110 est en général détruite, le contraste en lumière ambiante peut être augmenté considérablement (jusqu'à un facteur 4) en mettant un polariseur 120 après le moyen diffuseur 110 comme représenté sur la Figure 8. Son orientation est parallèle par rapport au polariseur de sortie du LCD. Dans certain cas où la polarisation de la lumière sortant du LCD est extrêmement bien maintenue en passant par l'élément 110, le polariseur 120 peut prendre la fonction du polariseur de sortie du LCD, ce qui permet d'enlever ce dernier afin d'améliorer la luminance du système de visualisation.

De nombreux perfectionnements peuvent être apportés au système ci-dessus sans sortir du cadre des revendications ci-jointes.

## Revendications

1. Dispositif d'affichage comportant un système d'éclairage (10) arrière fournissant une lumière collimatée, un modulateur electro-optique transmissif du type afficheur à cristaux liquides (LCD) et un moyen (110) pour distribuer la lumière angulairement, caractérisé en ce qu'une couche de filtres colorés (117) est positionnée entre l'afficheur et le moyen pour distribuer la lumière angulairement.

2. Dispositif selon la revendication 1, caractérisé en ce que la couche de filtres colorés est réalisée par des filtres d'interférence dichroïque, en utilisant un procédé holographique, une interférence biréfringence, un procédé photographique.

3. Dispositif selon les revendications 1 et 2, caractérisé en ce que la couche de filtres colorés incorpore une couche matricielle noire appelée "black matrix" (118).

4. Dispositif selon l'une quelconque des revendications 1 à 3, caractérisé en ce qu'une couche matricielle noire appelée "black matrix" supplémentaire est incorporée au niveau des éléments actifs de l'afficheur.

5. Dispositif selon l'une quelconque des revendications 1 à 4, caractérisé en ce que la distance entre le moyen pour distribuer la lumière angulairement et l'afficheur est choisie pour obtenir un effet de filtrage spatial.

6. Dispositif selon l'une quelconque des revendications 1 à 5, caractérisé en ce que le moyen pour distribuer la lumière angulairement présente une caractéristique angulaire non-lambertian.

7. Dispositif selon l'une quelconque des revendications 1 à 6, caractérisé en ce que le polariseur de sortie du LCD est placé après le moyen pour distribuer la lumière angulairement.

8. Dispositif selon l'une quelconque des revendications 1 à 8, caractérisé en ce qu' un polariseur supplémentaire (120) orienté parallèle par rapport au polariseur de sortie du LCD est placé après le moyen pour distribuer la lumière angulairement.

9. Dispositif selon l'une quelconque des revendications 1 à 6, caractérisé en ce que l'un des substrats transparents formant l'afficheur à cristaux liquides incorpore une rangée à une ou deux dimensions de micro-lentilles, chaque micro-lentille formant l'image de l'élément pixel associé de l'afficheur sur l'écran de diffusion.

10. Dispositif selon l'une quelconque des revendications 1 à 7, caractérisé en ce que l'un des substrats transparents formant l'afficheur à cristaux liquides incorpore une rangée à une ou deux dimensions de micro-lentilles, chaque micro-lentille collectant la lumière entrant dans l'élément pixel associé de l'afficheur.
